# EUROPÄISCHE PATENTSCHRIFT

(11) **EP 2 812 217 B1**
(45) Veröffentlichungstag und Bekanntmachung des Hinweises auf die Patenterteilung: **22.06.2016**
(21) Anmeldenummer: 12809674.0
(22) Anmeldetag: 11.12.2012
(51) Int. Cl.: B60T 8/48

(54) **FAHRZEUGBREMSSYSTEM**
VEHICLE BRAKE SYSTEM
SYSTÈME DE FREINAGE DE VÉHICULE

(30) Priorität: 20.12.2011 DE 102011121748
(43) Veröffentlichungstag der Anmeldung: 17.12.2014
(73) Patentinhaber: Lucas Automotive GmbH, 56070 Koblenz (DE)
(72) Erfinder: MARX, Andreas, 56220 Kaltenengers (DE)
(74) Vertreter: Schmidt, Steffen J.
(86) Internationale Anmeldenummer: PCT/EP2012/075058
(87) Internationale Veröffentlichungsnummer: WO 2013/092294

(56) Entgegenhaltungen:
- WO-A1-2004/101308
- WO-A2-2011/132074
- FR-A1- 2 926 771
- JP-A- 2005 324 640
- JP-A- 2008 120 220
- US-A1- 2010 187 901

## Beschreibung

### Technisches Gebiet

Es wird ein Fahrzeugbremssystem mit einer elektronischen Steuerung zum Steuern einer Fahrzeugbremsanlage und einer elektrischen Maschine, die sowohl motorisch als auch generatorisch betrieben werden kann, beschrieben.

### Hintergrund

Fahrzeuge weisen in der Regel eine Fahrzeugbremsanlage auf, in welcher über ein Hydraulikfluid eine Bremsung an Radbremsen eines Fahrzeugs erzielt wird. Zunehmend weisen Fahrzeuge aber auch eine elektrische Maschine, wie einen Elektromotor, auf, welche dazu verwendet wird, das Fahrzeug zumindest unterstützend zu einem Verbrennungsmotor anzutreiben. Die elektrische Maschine bietet gegenüber einem Verbrennungsmotor den Vorteil, dass sie bei einer sogenannten regenerativen Bremsung generatorisch betrieben werden kann, um eine Fahrzeugbatterie aufzuladen. Die in der aufgeladenen Batterie gespeicherte chemische Energie findet dann in einem motorischen Betrieb der elektrischen Maschine wieder Verwendung zum Antrieb des Kraftfahrzeugs.

Während im Normalbremsbetrieb Bewegungsenergie des Fahrzeugs aufgrund des reibschlüssigen Zusammenwirkens von Bremsbacken und Bremsscheiben an den Radbremsen in Wärmeenergie umgewandelt wird, erfolgt im regenerativen Bremsbetrieb somit ein Aufladen der Fahrzeugbatterie. Da im regenerativen Bremsbetrieb das Abbremsen des Kraftfahrzeugs mittels der elektrischen Maschine erfolgt, können die Radbremsen unbetätigt bleiben. In der Regel ist dies sogar erwünscht, da jegliche an den Radbremsen in Wärmeenergie umgewandelte Bewegungsenergie nicht mehr zum Aufladen der Fahrzeugbatterie zur Verfügung steht.

Die Steuerung der Aufteilung der Komponenten, welche die Bremsung durchführen - Fahrzeugbremssystem und elektrische Maschine - erfolgt über verschiedene Steuer- und zusätzliche Einrichtungen, wie beispielsweise zusätzliche Ventile.

So beschreibt DE 10 2009 039 207 A1 eine regenerative Fahrzeugbremse und ein Betriebsverfahren für eine regenerative Fahrzeugbremse, welche eine Regenerations-Einrichtung aufweist, die einen asymmetrischen regenerativen Bremsbetrieb für einen ersten und einen zweiten hydraulischen Bremskreis ermöglicht. Ein Fahrzeug mit einer solchen regenerativen Fahrzeugbremse umfasst einen Generator, wobei in dem regenerativen Bremsbetrieb ein Bremsdruckaufbau an Radbremsen des ersten Bremskreises zumindest reduziert und ein Bremsdruckaufbau an Radbremsen des zweiten Bremskreises im Wesentlichen unreduziert erfolgt. Dazu weist die Regenerations-Einrichtung zumindest Verzögerungseinrichtungen auf.

Die in DE 10 2009 039 207 A1 beschriebene regenerative Fahrzeugbremse weist hingegen wiederum zusätzliche Komponenten zur Steuerung der regenerativen Fahrzeugbremse und zum Erzielen einer kombinierten Bremsung einer rein hydraulischen Fahrzeugbremsanlage und einer elektrischer Maschine auf.

Die DE 11 2008 000 673 T5 bezieht sich auf ein Fahrzeugbremssystem mit einem Elektromotor, der eine Radantriebskraft oder eine regenerative Radbremskraft erzeugt. Um das Betätigungsgefühl eines Bremspedals in einem Fahrzeug mit einem Elektromotor, der das regenerative Bremsen ausführt zu verbessern hat eine erste Radbremskrafterzeugungseinrichtung, die erste Radbremskräfte, die durch das regenerative Bremsen erzeugt werden, auf Räder aufbringt, und eine zweite Radbremskrafterzeugungseinrichtung auf, die den Druck eines Arbeitsfluids einstellt, der durch den Betätigungsdruck erzeugt wird, der auf ein Bremspedal durch einen Fahrer aufgebracht wird. Zweite Radbremskräfte werden auf Räder aufgebracht, indem der Druck zu den jeweiligen Rädern übertragen wird, wobei die Fahrzeugbremsvorrichtung die geforderten Radbremskräfte, die der Betätigung des Bremspedals durch den Fahrer entsprechen, auf die Räder aufbringt. Eine dritte Radbremskrafterzeugungseinrichtung bringt dritte Radbremskräfte, die sich von den ersten und zweiten Radbremskräften unterscheiden, auf die Räder aufbringt. Eine Bremssteuereinrichtung gleicht die Bremskräfte auf, die der Verringerung der ersten Radbremskräfte entsprechen durch dritte Radbremskräfte der dritten Radbremskrafterzeugungseinrichtung, wenn sich die ersten Radbremskräfte aufgrund der Verschlechterung der Umwandlungseffizienz der elektrischen Energie verringern, was während des regenerativen Bremsens auftritt, während die ersten Radbremskräfte auf die Räder aufgebracht werden.

Die DE 10 2005 024 339 A1 betrifft eine Fahrzeugbremsvorrichtung mit einer Hydraulikbremsvorrichtung zum Verstärken einer Bremsbetätigungskraft durch eine Verstärkervorrichtung bei einer Bremsbetätigung zum Aufbringen eines Basisfluiddrucks, der in Abhängigkeit von der verstärkten Bremsbetätigungskraft erzeugt wird, auf Radzylinder von Rädern, so dass eine Basishydraulikbremskraft an den Rädern erzeugt wird. Eine Pumpe dient zum Erzeugen und Aufbringen eines gesteuerten Fluiddrucks auf die Radzylinder, so dass eine gesteuerte Hydraulikbremskraft an den Rädern erzeugt wird. Eine Bremsbetätigungszustandserfassungseinrichtung dient zum Erfassen des Bremsbetätigungszustands. Eine Regenerationsbremsvorrichtung bewirkt, dass ein Elektromotor eine Regenerationsbremskraft entsprechend dem Bremsbetätigungszustand an den Rädern erzeugt, die durch den Elektromotor angetrieben werden. Eine Variationserfassungseinrichtung erfasst die Variation einer Ist-Regenerationsbremskraft, die tatsächlich durch die Regenerationsbremsvorrichtung erzeugt wird. Eine Bremskraftausgleichseinrichtung erzeugt den gesteuerten Fluiddruck durch Antreiben der Pumpe der Hydraulikbremsvorrichtung, so dass eine gesteuerte Hydraulikbremskraft an den Rädern erzeugt wird, um den Mangel der Regenerationsbremskraft aufgrund der Variation auszugleichen, der durch die Variationserfassungseinrichtung erfasst wird.

Die DE 10 2006 055 799 A1 betrifft ein Verfahren zum regenerativen Bremsen eines Fahrzeugs, mittels eines hydraulischen oder pneumatischen
Bremssystems, eines elektromechanischen Bremssystems und eines Generators, wobei jedes der Systeme einen bestimmten Anteil einer gewünschten Gesamtverzögerung des Fahrzeugs beiträgt. Ein Bremsvorgang kann besonders einfach und mit hohem Wirkungsgrad durchgeführt werden, wenn der Anteil der elektromechanischen Bremsvorrichtung abhängig vom Anteil des Generators geregelt wird.

Die DE 10 2010 040 190 A1 betrifft ein Bremssystem und ein Verfahren zum Betreiben eines Bremssystems mit zwei Bremskreisen, mit einer rekuperativen Bremse, insbesondere einem elektrischen Generator, einem Hauptbremszylinder und einem Bremspedal zur Verbesserung der Umweltverträglichkeit und der Energieeffizienz, die volle Verfügbarkeit des Drehmomentes bei niedrigen Drehzahlen sowie die geringere Geräuschentwicklung. Um bei einem derartigen Bremssystem das maximal verfügbare Generatorbremsmoment und damit auch den maximal möglichen Energiegewinn auszunutzen, muss die Betätigung des Bremspedals von dem direkten Durchgriff auf die Radbremsen entkoppelt werden. Bei einem Bremswunsch des Fahrers mit einem zugehörigen Sollbremsmoment wird bei Vorliegen einer ersten Bedingung wenigstens ein Auslassventil geöffnet und Bremsflüssigkeit mit einem zugeordneten Bremsflüssigkeitsvolumen in wenigstens einen Speicher geleitet. Anschließend wird das wenigstens eine Auslassventil bei Vorliegen einer zweiten Bedingung gescblossen wird, wobei die erste Bedingung vorliegt, wenn eine zum Bremswunsch korrespondierende Bremsgröße einen vorgegebenen Minimalwert nicht unterschreitet, und wobei die zweite Bedingung vorliegt, wenn das Bremsflüssigkeitsvolumen in den Speicher geflossen ist.

FR 2 926 771 betrifft ein Verfahren zum Bremsen von Hybridfahrzeugen. Das Bremssystem betrifft einen Hauptzylinder, der über ein ABS-System an Radbremsen angeschlossen ist. Zudem kann auf die hinteren Räder des Fahrzeugs eine regenerative Bremskraft über einen dort gekoppelten Elektromotor bewirken. Die elektrische Bremskraft wird dabei so aufgebaut, dass sie eine geringer werdende hydraulische Bremskraft kompensiert. Die Summe aus hydraulischer und elektrischer Bremskraft bleibt gleich.

JP 2008-120220 betrifft eine regenerative Bremse und Reibungsbremse und umfasst Mittel zum Ermitteln einer Steuerungsgröße für die Reibungsbremse basierend auf einer Zielreibungsbremsgröße, die aus der erforderlichen Bremskraft und einer regenerativen Ausführungsgröße berechnet wird.

WO 2011/132074 A2 betrifft ein Kraftfahrzeugbremssteuerungssystem, das ein Reibungsbremssystem und ein regernatives Bremssystem steuert. Am Beginn einer Bremsung wird das regenerative Bremssystem gesteuert, um eine begrenzte Bremskraft bereitzustellen, und das Reibungsbremssystem gesteuert, um eine erste zusätzliche Bremskraft bereitzustellen, sodass eine Kombination einer Zielbremskraft entspricht. Nach der Anfangsphase des Bremsens wird das regenerative Bremssystem so gesteuert, dass es eine größere Bremskraft bereitstellt, und das Reibungsbremssystem so gesteuert, dass es eine zusätzliche Bremskraft bereitstellt, sodass eine Kombination einer Zielbremskraft entspricht.

Es sind im Stand der Technik jedoch keine Fahrzeugbremssysteme bekannt, welche einen regenerativen Bremsbetrieb für ein Fahrzeug mit einer hydraulischen Fahrzeugbremsanlage und einer elektrischen Maschine bieten, in welchen eine Aufteilung der die Bremsung bereitstellenden Komponenten des Fahrzeugs ohne zusätzliche Einrichtungen gesteuert wird und wobei dazu eine optimierte Bremsung sowie einem Fahrer die von einer rein hydraulischen Bremsanlage bekannten Eigenschaften bereitgestellt werden.

Zusätzliche Einrichtungen wirken sich nicht nur negativ auf den zusätzlich benötigten Raum aus, sondern verursachen auch höhere Kosten sowie einen größeren Steuerungsaufwand. Zudem werden oftmals noch weitere Vorrichtungen in Fahrzeugen mit derartigen Fahrzeugbremsen vorgesehen, welche dem Fahrer den Eindruck und das Verhalten einer rein hydraulischen Bremsanlage simulieren. Aufgrund dieser Vorrichtungen ergibt sich ebenso ein größerer Steuerungsaufwand.

### Zugrunde liegende Aufgabe

Es ist daher Aufgabe ein Fahrzeugbremssystem bereitzustellen, welches bestehende Komponenten einer Fahrzeugbremsanlage verwendet, um einen regenerativen Bremsbetrieb für ein Fahrzeug mit einem hydraulischen Fahrzeugbremssystem und einer motorisch und generatorisch betreibbaren elektrischen Maschine zu erzielen. Zudem soll das Bremsverhalten und das Bremsgefühl einer hydraulischen Fahrzeugbremsanlage auch im regenerativen Bremsbetrieb erhalten bleiben.

### Vorgeschlagene Lösung

Ein diese Aufgabe lösendes Fahrzeugbremssystem weist eine elektronische Steuerung (ECU) zum Steuern einer Fahrzeugbremsanlage und einer motorisch und generatorisch betreibbaren elektrischen Maschine auf. Die elektronische Steuerung (ECU) kommuniziert mit der Fahrzeugbremsanlage und der elektrischen Maschine und ist dazu ausgebildet, die elektrische Maschine generatorisch zum Erzielen einer Fahrzeugbremswirkung zu betreiben. Die Fahrzeugbremsanlage weist wenigstens eine Radbremse, einen Hauptzylinder zum Erzeugen eines Bremsdrucks an der Radbremse mittels eines Hydraulikfluids, eine Zuführleitung und eine Rückführleitung, eine Vielzahl von Ventilen zur Steuerung der Zu- und Abfuhr des Hydraulikfluids, sowie einen Zwischenspeicher auf. Dabei ist die elektronische Steuerung (ECU) weiter dazu ausgebildet ist, die Ventile und die elektrische Maschine so zu steuern, dass bei einem Fahrerbremswunsch durch Betätigung eines Bremspedals Hydraulikfluid der Radbremse von dem Hauptzylinder über die Zuführleitung zum Erzeugen eines Bremsdrucks an der Radbremse zugeführt wird. Nach dem Erreichen des dem Fahrerbremswunsch entsprechenden Bremsdrucks an der Radbremse wird die Zufuhr von Hydraulikfluid von dem Hauptzylinder zu der Radbremse unterbrochen, wobei der mittels Hydraulikfluid hervorgerufene Bremsdruck allmählich abgebaut wird. Gleichzeitig wird in entsprechendem Maß die elektrische Maschine zunehmend generatorisch betrieben, um eine Bremsung zumindest eines Rades des Fahrzeugs entsprechend dem Fahrerbremswunsch zu erzielen. Bei einer Erhöhung des Fahrerbremswunschs wird zusätzlich Hydraulikfluid von dem Hauptzylinder der wenigstens einen Radbremse zugeführt. Bei abnehmender Fahrzeuggeschwindigkeit wird die elektrische Maschine abnehmend generatorisch betrieben, wobei in entsprechendem Maß gleichzeitig der Radbremse Hydraulikfluid von dem Zwischenspeicher und/oder dem Hauptzylinder zugeführt wird, um einen dem Fahrerbremswunsch entsprechenden Bremsdruck an der Radbremse zu erzielen.

Durch ein solches Fahrzeugbremssystem ergibt sich eine optimale Ausnutzung der mittels der hydraulischen Fahrzeugbremsanlage und der elektrischen Maschine bereitgestellten Bremsung. Zudem ergibt sich für den Fahrer eines Fahrzeugs mit einem derartigen Fahrzeugbremssystem stets ein Bremsgefühl, welches dem einer Bremsung bei einer rein hydraulischen Fahrzeugbremsanlage entspricht. Dadurch ergibt sich ein Fahrzeugbremssystem mit einem Bremspedalgefühl sowie einem Verzögerungsverhalten wie bei einem rein hydraulischen Fahrzeugbremssystem, wobei der Fahrer auch bei hoher Anbremsdynamik die gewünschte Fahrzeugverzögerung über die Betätigung des Bremspedals bestimmen kann. Zudem ergibt sich auch ein Bremsgeräusch, welches dem rein hydraulischer Fahrzeugbremssysteme entspricht.

Betätigt der Fahrer das Bremspedal wird den Radbremsen entsprechend der Stellung bzw. der Betätigung des Bremspedals Hydraulikfluid zugeführt, was zu einem Anstieg des Bremsdrucks an den Radbremsen führt. Für den Fahrer ergibt sich daher bei der Betätigung des Bremspedals ein ihm bekanntes Bremsverhalten sowie Bremspedalgefühl. Wird das Bremspedal in dieser Stellung gehalten, d.h. es liegt keine weitere Betätigung des Bremspedals vor, wird durch die elektronische Steuerung (ECU) die Zufuhr von Hydraulikfluid zu den Radbremsen unterbrochen. Der mittels des Hydraulikfluids hervorgerufene Bremsdruck wird dann abgebaut indem die zur Erzielung der Bremsung zugeführte Menge an Hydraulikfluid von den Radbremsen abgeführt wird. In entsprechendem Maß wird zudem gleichzeitig die elektrische Maschine generatorisch betrieben, um die Bremsung entsprechend dem Fahrerbremswunsch zu erzielen. Durch die Unterbrechung der Zufuhr bleibt der Druck an dem Bremspedal gleich, wobei sich das Bremspedalgefühl für den Fahrers nicht ändert. Zudem ändert sich das Bremsverhalten nicht, da die Bremsung anstelle des hydraulischen Fahrzeugbremssystems durch den generatorischen Betrieb der elektrischen Maschine erzielt wird. Der Fahrer nimmt daher den Wechsel der die Bremsung bereitstellenden Komponenten nicht wahr. Tritt dann eine Erhöhung des Fahrerbremswunschs durch eine Betätigung des Bremspedals durch den Fahrer auf, so wird den Radbremsen Hydraulikfluid in dem Maß zugeführt, welches dem zusätzlichen Fahrerbremswunsch entspricht. Auch dabei ergibt sich für den Fahrer wiederum ein ihm bekanntes Bremsverhalten und Bremspedalgefühl. Nimmt anschließend die Fahrzeuggeschwindigkeit aufgrund des Bremsvorgangs ab, so wird die elektrische Maschine abnehmend generatorisch betrieben und gleichzeitig und in entsprechendem Maß den Radbremsen Hydraulikfluid zugeführt, welches dem Fahrerbremswunsch entspricht. Dadurch ergibt sich während der gesamten Bremsung bis zum Stillstand des Fahrzeugs ein Bremspedalgefühl und ein Bremsverhalten welches dem von rein hydraulischen Fahrzeugbremsanlagen entspricht, ohne dass weitere Einrichtungen zur Steuerung der Zu- und Abfuhr von Hydraulikfluid sowie der elektrischen Maschine erforderlich sind.

Eine Erhöhung der Bremsung erfolgt bei diesem Fahrzeugbremssystem immer rein hydraulisch. Das Einblenden ("Blending") der Bremsung durch die generatorisch betreibbare elektrische Maschine erfolgt dabei nach einer Erhöhung des Bremsdrucks an den Radbremsen.

Dabei kann die Fahrzeugbremsanlage einen Bremskreis, dem sämtliche Radbremsen eines Fahrzeugs angehören, oder zwei bzw. mehr Bremskreise aufweisen, wobei einzelne Radbremsen bestimmten Bremskreisen angehören. Die elektronische Steuerung (ECU) ist dabei dazu ausgebildet, Ventile in den jeweiligen Bremskreisen zu steuern, so dass sich eine zuvor beschriebene regenerative Bremsung ergibt.

In weiteren Ausführungen kann das Hydraulikfluid während dem Abbauen des mittels des Hydraulikfluids hervorgerufenen Bremsdrucks dem Zwischenspeicher zugeführt werden. Dadurch kann auf einfache Art und Weise die Zufuhr von Hydraulikfluid durch das Zuführen aus dem Zwischenspeicher zu den Radbremsen genau gesteuert werden. Dies ermöglicht einen exakten Wechsel von einer rein hydraulischen zu einer rein generatorischen Bremsung, da die elektronische Steuerung (ECU) die zu- bzw. abgeführte Menge an Hydraulikfluid und das Maß, in welchem die elektrische Maschine generatorisch betrieben wird, bestimmt, wobei diese keinerlei Beeinflussung durch den Fahrer unterliegt. D.h. es wird nicht das Hydraulikfluid aus einem Bremsflüssigkeitsbehälter verwendet, deren Menge bzw. Druck in der Zuführleitung über den Hauptzylinder, einen Bremskraftverstärker und das Bremspedal von dem Fahrer beeinflusst werden kann.

In dem die oben genannte Aufgabe lösenden Fahrzeugbremssystem steuert die elektronische Steuerung (ECU) ferner die elektrische Maschine und die Ventile so, dass bei jeder weiteren Erhöhung des Fahrerbremswunschs durch Betätigung des Bremspedals eine der Erhöhung entsprechende Menge an Hydraulikfluid der Radbremse zugeführt wird, um den Bremsdruck an der Radbremse zu erhöhen. Weiter kann dann die elektronische Steuerung (ECU) die elektrische Maschine und die Ventile so steuern, dass nach jeder Erhöhung des Bremsdrucks an der Radbremse mittels Hydraulikfluid das Hydraulikfluid allmählich dem Zwischenspeicher zugeführt wird, und in entsprechendem Maß gleichzeitig die elektrische Maschine zunehmend generatorisch betrieben wird, um eine dem Fahrerbremswunsch entsprechende Bremsung an dem Rad zu erzielen. Dadurch wird die von der generatorisch betriebenen elektrischen Maschine bereitgestellte Bremsung sukzessive, d.h. nach jeder Erhöhung des Fahrerbremswunschs und Anstieg des Bremsdrucks an den Radbremsen, entsprechend der Erhöhung bzw. dem Anstieg erhöht.

Die elektrische Maschine kann während der Erhöhung des Bremsdrucks an der Radbremse auch weiterhin in dem Maß generatorisch betrieben wird, wie sie bereits zur Erzielung der Bremsung vor der Erhöhung des Fahrerbremswunschs betrieben worden ist. Im Falle einer stufenweisen Erhöhung des Fahrerbremswunschs wird dann nur die Menge an Hydraulikfluid der Radbremse zugeführt, welche der Erhöhung entspricht, d.h. dass der Bremsdruck an den Radbremsen auch nur dieser Erhöhung entspricht.

Die elektronische Steuerung (ECU) kann weiter die elektrische Maschine auch so steuern, dass die von der elektrischen Maschine bereitgestellte Bremsung reduziert wird, wenn der Fahrerbremswunsch durch eine Änderung der Stellung des Bremspedals abnimmt. Reduziert sich der Fahrerbremswunsch wird dann auch die von der generatorisch betriebenen elektrischen Maschine bereitgestellte Bremsung reduziert, wobei die von der elektrischen Maschine verfügbare Bremsung bei abnehmender Fahrzeuggeschwindigkeit ebenfalls reduziert ist.

Der dem zusätzlich zugeführten Hydraulikfluid entsprechende Bremsdruck an der Radbremse entspricht dabei der Differenz aus dem veränderten Fahrerbremswunsch und dem Fahrerbremswunsch vor der Erhöhung. Es wird daher der Bremsdruck im Vergleich zu rein hydraulischen Fahrzeugbremssystemen nur minimal erhöht, was sich positiv auf die Lebensdauer der Bestandteile des Fahrzeugbremssystems auswirkt.

Die Summe des mittels des Hydraulikfluids an der Radbremse bereitgestellten Bremsdrucks und der von der generatorisch betriebenen elektrischen Maschine bereitgestellten Bremsung kann stets dem Fahrerbremswunsch entsprechen, wobei dadurch die Bremsung immer der Stellung des Bremspedals und dem Fahrerbremswunsch entspricht. Der Fahrer nimmt daher auch keine Veränderung im Bremsverhalten aufgrund eines Wechsels wahr, da die Summe der jeweiligen Bremsungen (hydraulisch und generatorisch) beim Wechsel von rein hydraulisch zu rein generatorisch und von rein generatorisch zu rein hydraulisch immer gleich ist.

Das Fahrzeugbremssystem kann darüber hinaus zum Zuführen des Hydraulikfluids aus dem Zwischenspeicher eine Pumpe aufweisen.

Zudem kann der Zwischenspeicher der Fahrzeugbremsanlage mit der Zuführleitung verbunden sein. Daher kann der Druckaufbau in der Zuführleitung bei abnehmender Fahrzeuggeschwindigkeit durch die elektronische Steuerung (ECU) gesteuert werden, indem sie die Drehzahl der Pumpe verändert. D.h. das in dem Zwischenspeicher gespeicherte Hydraulikfluid wird zum Druckaufbau an den Radbremsen verwendet, wodurch durch sich über die Steuerung der Pumpe eine genauere Zufuhr von Hydraulikfluid zu den Radbremsen und ein genaueres Umstellen der hydraulischen und generatorischen Bremsung erreichen lässt, um immer eine gleichbleibende Bremsung zu erzielen.

Störeinflüsse die sich auf die Pumpe und die Regulierung des Durchsatzes von Hydraulikfluid wirken werden mittels vorher bestimmten Kennfeldern in der elektronischen Steuerung (ECU) korrigiert. Solche Störeinflüsse können ein Vordruck in den Bremsleitungen - Zuführ- und Rückleitung - bzw. an den Radbremsen, die Temperatur des Hydraulikfluids, der Radbremen oder die Umgebungstemperatur, sowie Schwankungen in der Versorgungsspannung sein.

Die elektronische Steuerung (ECU) des Fahrzeugbremssystems kann in einer Fahrzeug-/Bremssteuerung implementiert sein und damit in einer bestehenden Steuerung eines Fahrzeugs aufgenommen sein. Dadurch reduzieren sich die Kosten für ein derartiges Fahrzeugbremssystem. Weiter ist es daher auch möglich ohne größeren Aufwand eine elektrische Maschine nachträglich in ein Fahrzeug mit einer Fahrzeugbremsanlage einzubauen und ein hierin beschriebenes regeneratives Fahrzeugbremssystem vorzusehen, wobei zur Steuerung lediglich vorhandene Komponenten verwendet werden.

Die elektronische Steuerung (ECU) kann zur Erzeugung eines Bremsdrucks an der Radbremse Ventile in der Zuführleitung öffnen und kann weiter nach Erreichen des dem Fahrerbremswunsch entsprechenden Bremsdrucks an der Radbremse die Zufuhr von Hydraulikfluid von dem Hauptzylinder zu der Radbremse in der Zuführleitung durch Schließen wenigstens eines der Ventile in der Zuführleitung unterbrechen. Zum Abbauen des mittels des Hydraulikfluids hervorgerufenen Bremsdrucks an der Radbremse kann die elektronische Steuerung (ECU) ein Ventil zwischen der Radbremse und dem Zwischenspeicher in der Rückführleitung öffnen und das Ventil zwischen der Radbremse und dem Zwischenspeicher in der Rückführleitung nach dem Abbauen des mittels des Hydraulikfluids hervorgerufenen Bremsdrucks an der Radbremse schließen. Darüber hinaus kann die elektronische Steuerung (ECU) bei abnehmender Fahrzeuggeschwindigkeit das Ventil zwischen der Radbremse und dem Zwischenspeicher und/oder wenigstens eines der Ventile in der Zuführleitung öffnen.

### Kurze Beschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und / oder bildlich dargestellten Merkmale für sich oder in beliebiger Kombination den hier offenbarten Gegenstand. Die Abmessungen und Proportionen der in den Fig. gezeigten Komponenten sind hierbei nicht unbedingt maßstäblich; sie können bei zu implementierenden Ausführungsformen vom Veranschaulichten abweichen.
- Fig. 1: zeigt Verläufe des Drucks des Hydraulikfluids, eines Bremsmoments, einer Füllung des Zwischenspeichers und einer Pumpendrehzahl über die Zeit;
- Fig. 2: zeigt eine schematische Darstellung einer Fahrzeugbremsanlage, die Teil eines regenerativen Fahrzeugbremssystems ist, in einem ersten Zustand;
- Fig. 3: zeigt eine schematische Darstellung einer Fahrzeugbremsanlage, die Teil eines regenerativen Fahrzeugbremssystems ist, in einem zweiten Zustand;
- Fig. 4: zeigt eine schematische Darstellung einer Fahrzeugbremsanlage, die Teil eines regenerativen Fahrzeugbremssystems ist, in einem dritten Zustand; und
- Fig. 5: zeigt eine schematische Darstellung einer Fahrzeugbremsanlage, die Teil eines regenerativen Fahrzeugbremssystems ist, in einem vierten Zustand.

### Ausführliche Beschreibung der Ausführungsvarianten

Im Folgenden werden Ausführungsbeispiele eines regenerativen Fahrzeugbremssystems beschrieben. Übereinstimmende Elemente sind dabei in den Figuren mit denselben Bezugszeichen bezeichnet.

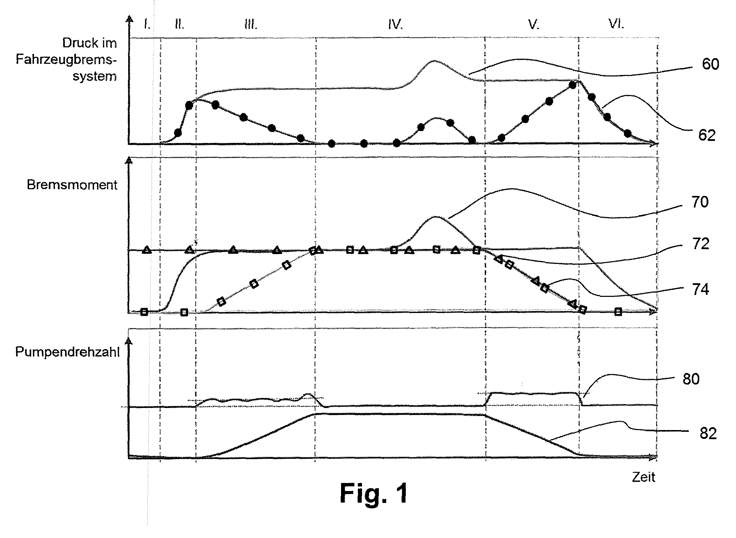

Fig. 1 zeigt den Verlauf bzw. den Druckanstieg und -Abfall des Hydraulikfluids in einem rein hydraulischen Fahrzeugbremssystem und in einem regenerativen Fahrzeugbremssystem über die Zeit. Die Linie 60 zeigt den Druckverlauf des Hydraulikfluids in einem rein hydraulischen Fahrzeugbremssystem und die Linie 62 zeigt den Druckverlauf des Hydraulikfluids in einem regenerativen Fahrzeugbremssystem.

Die Verläufe sowie weiteren Darstellungen in Fig. 1 sind in sechs Abschnitte unterteilt, wobei der erste Abschnitt I. den Zustand darstellt, in welchem keine Betätigung eines Bremspedals 12 vorliegt und damit das Fahrzeugbremssystem inaktiv ist.

Der zweite Abschnitt II. stellt den Zustand dar, in dem das Bremspedal 12 betätigt und von dem Fahrzeugbremssystem eine Bremsung vorgenommen wird. Dabei findet in Abschnitt II. bei beiden Fahrzeugbremssystemen ein nahezu gleicher Druckaufbau in Bremsleitungen bzw. an den Radbremsen 24a, 24b des Fahrzeugs statt.

Der dritte Abschnitt III. stellt den Zustand dar, in welchem der Druck des Hydraulikfluids in einem rein hydraulischen Fahrzeugbremssystem im Wesentlichen auf einem Niveau gehalten wird, und in dem regenerativen Fahrzeugbremssystem, wie es hierin beschrieben wird, der Druck allmählich abgebaut wird.

In dem vierten Abschnitt IV. ist der mittels des Hydraulikfluids bereitgestellte Bremsdruck in dem regenerativen Fahrzeugbremssystem maximal reduziert, wobei bei einer weiteren Betätigung des Bremspedals 12, eine der zusätzlichen Betätigung entsprechende Menge Hydraulikfluid einer Radbremse 24a, 24b zugeführt wird, was zu einem Druckanstieg in den Bremsleitungen und den Radbremsen 24a, 24b des Fahrzeugbremssystems führt. Reduziert daraufhin der Fahrer den Druck auf das Bremspedal 12, d.h. wird das Bremspedal 12 weniger stark von dem Fahrer betätigt, reduziert sich dementsprechend der Bremsdruck. In dem in Fig. 1 gezeigten Beispiel reduziert sich der Bremsdruck auf das vor der weiteren Betätigung herrschende Druck-Niveau. "Maximal reduziert" im vorgenannten Sinne heißt, dass der Druck des Hydraulikfluids an den Radbremsen dem Druck bei einer Nicht-Betätigung der Radbremsen 24a, 24b und einem Druck in einem regulären Fahrzustand des Fahrzeugs ohne Bremsung entspricht; denn es kann der Druck maximal nur soweit reduziert werden, bis das regenerative Bremsmoment aufgebraucht ist.

In dem rein hydraulischen Fahrzeugbremssystem wird in dem vierten Abschnitt IV. bei einer weiteren Betätigung des Bremspedals zusätzlich Hydraulikfluid den Radbremsen zugeführt, wobei der Druck in den Bremsleitungen des Fahrzeugbremssystems bzw. der Bremsdruck an den Radbremsen entsprechend zunimmt.

Der fünfte Abschnitt V. zeigt den Zustand eines regenerativen Fahrzeugbremssystems, in welchem bei abnehmender Fahrzeuggeschwindigkeit der Druck in den Bremsleitungen des Fahrzeugs zur Erzielung eines Bremsdrucks an den Radbremsen 24a, 24b allmählich aufgebaut wird. In dem rein hydraulischen Fahrzeugbremssystem ist der Druck hingegen auf dem gleichen Niveau wie nach der Erhöhung des Drucks durch die weitere Betätigung des Bremspedals 12.

Der sechste Abschnitt VI. stellt den Zustand dar, in welchem der Bremsdruck in dem rein hydraulischen Fahrzeugbremssystem und dem regenerativen Fahrzeugbremssystem abnimmt, da das Fahrzeug dem Fahrerbremswunsch entsprechend ausreichend abgebremst wurde oder sich im Stillstand befindet.

Fig. 1 zeigt zudem den Verlauf 70 des gesamten an der Radbremse 24a, 24b herrschenden Bremsmoments und den Verlauf 74 des von der elektrischen Maschine bereitgestellten Bremsmoments sowie der von der elektrischen Maschine zur Verfügung stehenden Bremsleistung 72, welche von der Fahrzeuggeschwindigkeit abhängt.

In einem regenerativen Fahrzeugbremssystem stellt die elektrische Maschine in Abhängigkeit der Fahrzeuggeschwindigkeit ein Moment 74 zur Verfügung, welches zur Bremsung des Fahrzeugs verwendet werden kann. Dieses Moment 74 wird in Abschnitt III. allmählich dazu verwendet, um die Bremsung an einem Rad des Fahrzeugs zu erzielen, welche von einer hydraulischen Fahrzeugbremsanlage 10 bereitgestellt wird. Dazu nimmt in Abschnitt III. die von der hydraulischen Fahrzeugbremsanlage 10 bereitgestellte Bremsung durch einen Abbau des an der Radbremse 24a, 24b anliegenden Bremsdrucks allmählich ab und das an dem Rad des Fahrzeugs wirkende Bremsmoment von der generatorisch betriebenen elektrischen Maschine nimmt in entsprechendem Maß gleichzeitig allmählich zu. Dabei bleibt das gesamte an dem Rad herrschende Bremsmoment 70 - bereitgestellt durch die generatorisch betriebene elektrische Maschine und die Bremsung über die Radbremsen 24a, 24b - im Wesentlichen konstant, d.h. entspricht dem vom Fahrer über die Stellung des Bremspedals 12 vorgegebenen Bremswunsch. Da die von der elektrischen Maschine zur Verfügung stehende Bremsleistung 72 bei abnehmender Fahrzeuggeschwindigkeit ebenfalls abnimmt, wird die Bremsung an dem Rad des Fahrzeugs von der elektrischen Maschine in Abschnitt V. allmählich reduziert, wobei gleichzeitig in entsprechendem Maß der Radbremse 24a, 24b Hydraulikfluid zugeführt wird. Der Verlauf des gesamten Bremsmoments 70, bereitgestellt durch das regenerative Fahrzeugbremssystem bestehend aus der Fahrzeugbremsanlage 10 und der motorisch und generatorisch betreibbaren elektrischen Maschine, entspricht daher der durch den Druck 60 bereitgestellten Bremsung, welcher von einem rein hydraulischen Fahrzeugbremssystem zur Erzielung der gleichen Bremsung bereitgestellt wird.

Weiter zeigt Fig. 1 die Pumpendrehzahl 80 einer Pumpe 28 zum Zuführen von Hydraulikfluid in dem regenerativen Fahrzeugbremssystem und die Füllzustände 82 des Zwischenspeichers 26. Entsprechend der Reduzierung des Bremsdrucks an der Radbremse 24a, 24b und dem Abbau des Bremsdrucks an der Radbremse 24a, 24b wird dem Zwischenspeicher 26 Hydraulikfluid zugeführt. Daher wird dem Zwischenspeicher 26 in Abschnitt III. Hydraulikfluid zugeführt, weshalb der Füllzustand des Zwischenspeichers zunimmt, und in Abschnitt V. Hydraulikfluid von dem Zwischenspeicher 26 zur Erhöhung des Bremsdrucks an der Radbremse 24a, 24 b abgeführt, weshalb der Füllzustand in Abschnitt V. wieder, entsprechend dem Zustand vor Reduzierung des Bremsdrucks an der Radbremse 24a, 24b in Abschnitt III, abnimmt. Die Pumpe 28 kann in Abschnitt III. zum Abführen des Hydraulikfluids von den Radbremsen 24a, 24 b unterstützend betrieben werden. In Abschnitt V. wird die Pumpe 28 zum Zuführen des Hydraulikfluids von dem Zwischenspeicher 26 zu den Radbremsen 24a, 24b betrieben.

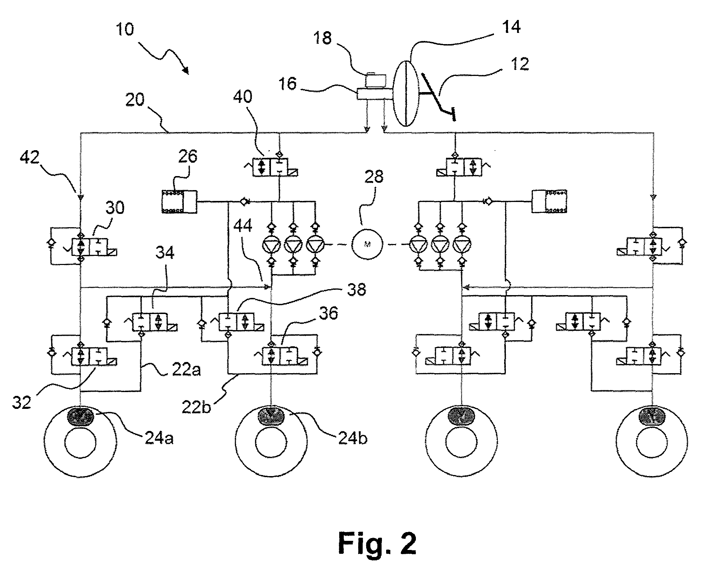

Die Figuren 2 bis 5 zeigen eine Fahrzeugbremsanlage 10 für ein Fahrzeug mit zwei Bremskreisen, wobei im Folgenden das regenerative Fahrzeugbremssystem in Bezug auf einen Bremskreis erläutert wird. Das für die Komponenten dieses Bremskreises Gesagte gilt in entsprechender Weise für den anderen Bremskreis. Die in den Figuren 2 bis 5 gezeigte Fahrzeugbremsanlage 10 weist ein Bremspedal 12 auf, welches über einen Bremskraftverstärker 14 mit einem Hauptzylinder 16 verbunden ist. Der Hauptzylinder 16 ist mit einem Bremsflüssigkeitsbehälter 18 verbunden, in welchem das Hydraulikfluid vorrätig gehalten wird. Über die Zuführleitung 20 ist der erste Bremskreis mit den Radbremsen 24a und 24b über Ventile 30, 32 und 36 verbunden. Von den Radbremsen 24a und 24b führen Rückführleitungen 22a und 22b über Ventile 34 und 38 zu dem Zwischenspeicher 26, welcher mittels der Pumpe 28 gefüllt und entleert werden kann. D.h. die Pumpe 28 ist dazu ausgebildet Hydraulikfluid von den Radbremsen 24a, 24b abzuführen und dem Zwischenspeicher 26 zuzuführen, sowie Hydraulikfluid von dem Zwischenspeicher 26 den Radbremsen 24a und 24b zuzuführen. Weiterhin ist die Pumpe 28 eingangsseitig über ein Ventil 40 mit dem Bremsflüssigkeitsbehälter 18 verbindbar. Durch Öffnen des Ventils 40 kann die Pumpe 28 daher Hydraulikfluid aus dem Flüssigkeitsbehälter 18 ansaugen. Darüber hinaus weisen die Ventile 30, 32, 34, 36 und 38 ein Rückschlagventil auf, welches zur Druckbegrenzung dient.

Die Ventile 30, 32 und 36 können als Ventile ausgebildet sein, welche in ihrer Normalstellung geöffnet sind, und somit einen Durchfluss von Hydraulikfluid erlauben, und die Ventile 34 und 38, sowie das Ventil 40, können als Ventile ausgebildet sein, welche in ihrer Normalstellung geschlossen sind und somit einen Durchfluss von Hydraulikfluid verhindern. Jedoch ist es ebenso möglich andere Ventile zum Erreichen der gleichen Wirkung zu verwenden.

Zudem kann an dem Bremspedal ein Pedalwegsensor zur Erfassung der Betätigung des Bremspedals 12 angeordnet sein. Weitere Komponenten einer hydraulischen Fahrzeugbremsanlage sind hier aus Gründen der Übersichtlichkeit nicht dargestellt. Es ist aber offensichtlich, dass ein Fahrzeugbremssystem weitere Komponenten aufweisen kann, wobei diese zum Verständnis des vorliegenden Fahrzeugbremssystems nicht zwingend erforderlich sind.

Fig. 2 zeigt eine schematische Darstellung einer Fahrzeugbremsanlage 10, die Teil des regenerativen Fahrzeugbremssystems ist, in einem ersten Zustand. Der dabei dargestellte Zustand der Fahrzeugbremsanlage 10 entspricht dem Abschnitt II. aus Fig. 1.

Betätigt der Fahrer das Bremspedal 12 wird über die geöffneten Ventile 30 und 32, bzw. 30 und 36 den Radbremsen 24a, 24b Hydraulikfluid entsprechend dem Fahrerbremswunsch aufgrund der Stellung des Bremspedals 12 aus dem Bremsflüssigkeitsbehälter 18 mittels des Hauptzylinders 16 zugeführt. Die Pfeile 42 und 44 deuten die Zufuhr von Hydraulikfluid an. Die Ventile 34 und 38 sind zum Aufbauen des Bremsdrucks geschlossen.

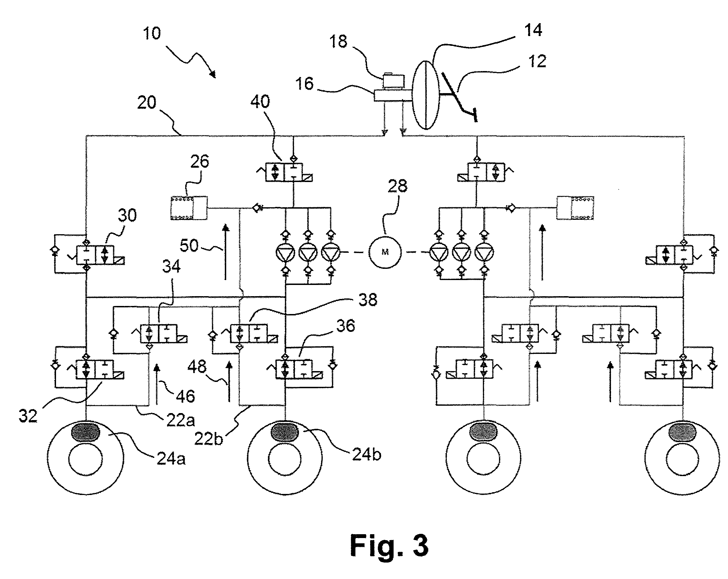

Fig. 3 zeigt eine schematische Darstellung einer Fahrzeugbremsanlage 10, die Teil des regenerativen Fahrzeugbremssystems ist, in einem zweiten Zustand. Der dabei dargestellte Zustand der Fahrzeugbremsanlage 10 entspricht dem Abschnitt III. aus Fig. 1.

Ist ein Druckaufbau des Hydraulikfluids erfolgt und findet keine weitere Betätigung des Bremspedals 12 durch den Fahrer statt, d.h. das Bremspedal 12 wird in einer Betätigungsstellung gehalten, wird das Ventil 30 durch die elektrische Steuerung (ECU) geschlossen und die Ventile 34 und 38 durch die ECU geöffnet. Zudem steuert die ECU die Pumpe 28 derart, dass sie Hydraulikfluid von den Radbremsen 24a, 24b über die geöffneten Ventile 34, 38 dem Zwischenspeicher 26 zuführt, um den durch die Betätigung des Bremspedals 12 herrschenden Druck an den Radbremsen 24a, 24b abzubauen. Die Pfeile 46, 48 und Pfeil 50 zeigen die Zufuhr von Hydraulikfluid von den Radbremsen 24a, 24b zu dem Zwischenspeicher 26. Gleichzeitig steuert die ECU die elektrische Maschine derart, dass sie eine Bremsung an den Rädern des Fahrzeugs entsprechend dem durch die Betätigung des Bremspedals 12 an den Radbremsen 24a, 24b herrschenden Bremsdruck ausführt.

Der Druckaufbau und die generatorische Bremsung durch die elektrische Maschine erfolgt dabei allmählich, wobei der Wechsel von rein hydraulischer Bremsung zu rein generatorischer Bremsung sukzessive erfolgen kann, d.h. ein kontinuierlicher Anstieg bzw. Abfall wie in den Figuren dargestellt oder aber auch schrittweise bzw. stufenweise. Des Weiteren wäre auch ein exponentieller Anstieg bzw. Abfall möglich.

Durch das geschlossene Ventil 30 bleibt der Druck zwischen dem Ventil 30 und dem Hauptzylinder 16 bzw. dem Bremspedal 12 gleich, so dass der Fahrer keine Veränderung wahrnimmt.

Die ECU steuert dabei das Maß in welchem die elektrische Maschine generatorisch zur Erzielung einer Bremsung an den Rädern des Fahrzeugs betrieben wird und in welchem Maß Hydraulikfluid von den Radbremsen 24a, 24b dem Zwischenspeicher zugeführt wird. Über die Steuerung der Drehzahl der Pumpe 28 ist eine sehr genaue Steuerung der Menge an Hydraulikfluid und damit eine Anpassung der hydraulischen Bremsung an das Maß der Bremsung durch die elektrische Maschine möglich. Dabei wird die gesamte an einem Rad des Fahrzeugs erzielte Bremsung mittels der elektrischen Maschine und dem Hydraulikfluid immer konstant gehalten. Dies erfolgt über die ECU, welche über weitere Einrichtungen, wie Sensoren und dergleichen, welche ohnehin in dem Fahrzeug verwendet werden, das Maß der Bremsung der elektrischen Maschine, sowie die von ihr zur Verfügung stehende Bremsleistung, und den Bremsdruck an den Radbremsen 24a, 24b ermitteln und zur Bestimmung der Menge an Hydraulikfluid und dem Maß der Bremsung durch die elektrische Maschine verwenden kann.

Ist ein ausreichender Druckabbau an den Radbremsen 24a, 24b erfolgt und wird die dem Fahrerbremswunsch entsprechende Bremsung allein von der generatorisch betriebenen elektrischen Maschine bereitgestellt, so werden die Ventile 34 und 38 durch die ECU wieder geschlossen.

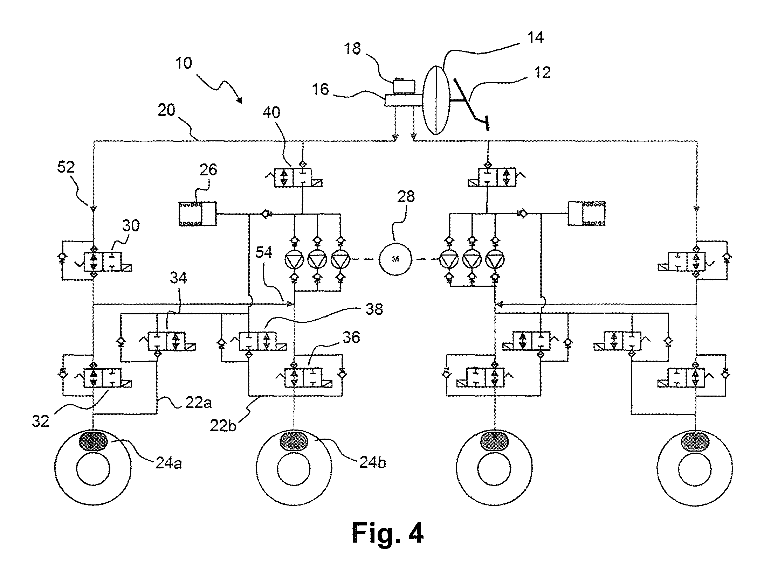

Fig. 4 zeigt eine schematische Darstellung einer Fahrzeugbremsanlage 10, die Teil des regenerativen Fahrzeugbremssystems ist, in einem dritten Zustand. Der dabei dargestellte Zustand der Fahrzeugbremsanlage 10 entspricht dem Abschnitt IV. aus Fig. 1.

Erfolgt eine weitere Betätigung des Bremspedals 12 durch den Fahrer, so öffnet die ECU das Ventil 30 und Hydraulikfluid wird, wie durch die Pfeile 52, 54 dargestellt, den Radbremsen 24a, 24b über die geöffneten Ventile 32, 36 zugeführt. Dabei wird lediglich die Menge an Hydraulikfluid den Radbremsen 24a, 24b zugeführt bzw. ein derartiger Aufbau des Bremsdrucks an den Radbremsen 24a, 24b erzielt, welcher der weiteren Betätigung des Bremspedals 12 entspricht. Reduziert sich der Fahrerbremswunsch wieder, so kann das den Radbremsen 24a, 24b zusätzlich zugeführte Hydraulikfluid über die geöffneten Ventile 30, 32 und 36 wieder zurückgeführt werden bzw. der weiteren Betätigung des Bremspedals 12 entsprechende Bremsdruck abgebaut werden. Nach der weiteren Betätigung wird durch die ECU das Ventil 30 wieder geschlossen.

Es ist dabei auch möglich, dass die ECU die durch die generatorisch betriebene elektrische Maschine bereitgestellte Bremsung um ein bestimmtes Maß entsprechend einem veränderten Fahrerbremswunsch erhöht oder verringert.

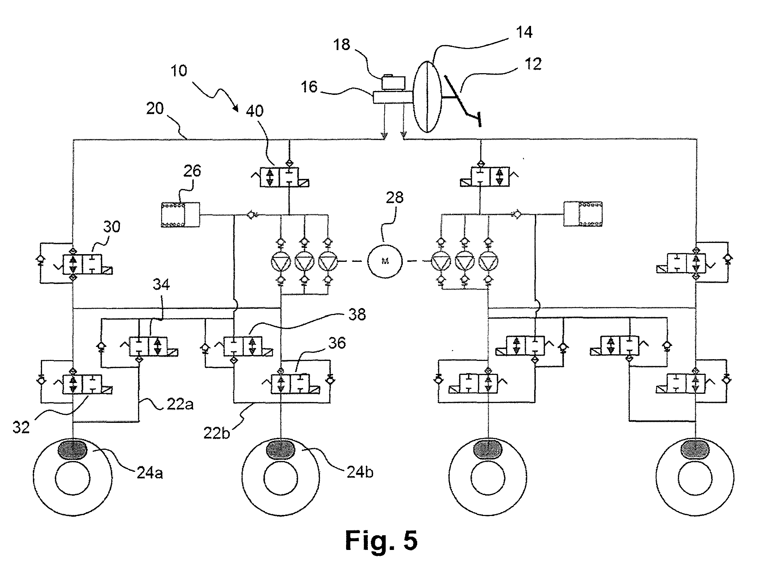

Fig. 5 zeigt eine schematische Darstellung einer Fahrzeugbremsanlage 10, die Teil des regenerativen Fahrzeugbremssystems ist, in einem vierten Zustand. Der dabei dargestellte Zustand der Fahrzeugbremsanlage 10 entspricht dem Abschnitt V. aus Fig. 1.

Nimmt die Fahrzeuggeschwindigkeit aufgrund der Bremsung des Fahrzeugs ab, reduziert sich auch die von der elektrischen Maschine zur Verfügung stehende Bremsleistung. Daher wird das Ventil 30 durch die ECU geöffnet und Hydraulikfluid mittels der Pumpe 28 den Radbremsen 24a, 24b allmählich zugeführt, so dass sich eine dem Fahrerbremswunsch entsprechende Bremsung an den Rädern des Fahrzeugs einstellt. Gleichzeitig wird die von der elektrischen Maschine bereitgestellte generatorische Bremsung der Räder allmählich reduziert. Dabei werden die Pumpe 28 und die elektrische Maschine so gesteuert, dass ein allmählicher Wechsel von der rein generatorischen zu der rein hydraulischen Bremsung stattfindet, wobei die gesamte Bremsung an den Rädern des Fahrzeugs durch eine entsprechende Steuerung mittels der ECU stets konstant gehalten wird.

## Patentansprüche

1. Fahrzeugbremssystem mit einer elektronischen Steuerung (ECU) zum Steuern einer Fahrzeugbremsanlage (10) und einer motorisch und generatorisch betreibbaren elektrischen Maschine, wobei die elektronische Steuerung (ECU) mit der Fahrzeugbremsanlage (10) und der elektrischen Maschine kommuniziert und dazu ausgebildet ist, die elektrische Maschine generatorisch zum Erzielen einer Fahrzeugbremswirkung zu betreiben, und wobei die Fahrzeugbremsanlage (10) wenigstens eine Radbremse (24a; 24b), einen Hauptzylinder (16) zum Erzeugen eines Bremsdrucks an der Radbremse (24a; 24b) mittels eines Hydraulikfluids, eine Zuführleitung (20) und eine Rückführleitung (22a; 22b), eine Vielzahl von Ventilen (30, 32, 34, 36, 38, 40) zur Steuerung der Zu- und Abfuhr des Hydraulikfluids, sowie einen Zwischenspeicher (26) aufweist, wobei die elektronische Steuerung (ECU) weiter dazu ausgebildet ist, die Ventile (30, 32, 34, 36, 38, 40) und die elektrische Maschine so zu steuern, dass
bei einem Fahrerbremswunsch durch Betätigung eines Bremspedals (12) Hydraulikfluid der Radbremse (24a; 24b) von dem Hauptzylinder (16) über die Zuführleitung (20) zum Erzeugen eines Bremsdrucks an der Radbremse (24a; 24b) zugeführt wird,
nach dem Erreichen des dem Fahrerbremswunsch entsprechenden Bremsdrucks an der Radbremse (24a; 24b) die Zufuhr von Hydraulikfluid von dem Hauptzylinder (16) zu der Radbremse (24a; 24b) unterbrochen wird, wobei der mittels Hydraulikfluid hervorgerufene Bremsdruck allmählich abgebaut wird und in entsprechendem Maß gleichzeitig die elektrische Maschine zunehmend generatorisch betrieben wird, um eine Bremsung zumindest eines Rades des Fahrzeugs entsprechend dem Fahrerbremswunsch zu erzielen,
bei einer Erhöhung des Fahrerbremswunschs zusätzlich Hydraulikfluid von dem Hauptzylinder (16) der wenigstens einen Radbremse (24a; 24b) zugeführt wird, und
bei abnehmender Fahrzeuggeschwindigkeit die elektrische Maschine abnehmend generatorisch betrieben wird und in entsprechendem Maß gleichzeitig der Radbremse (24a; 24b) Hydraulikfluid von dem Zwischenspeicher (26) und/oder dem Hauptzylinder (16) zugeführt wird, um einen dem Fahrerbremswunsch entsprechenden Bremsdruck an der Radbremse (24a; 24b) zu erzielen, wobei die elektronische Steuerung (ECU) die elektrische Maschine und die Ventile (30, 32, 34, 36, 38, 40) so steuert, dass bei jeder weiteren Erhöhung des Fahrerbremswunschs durch Betätigung des Bremspedals (12) eine der Erhöhung entsprechende Menge an Hydraulikfluid der Radbremse (24a; 24b) zugeführt wird, um den Bremsdruck an der Radbremse (24a; 24b) zu erhöhen, und dass nach jeder Erhöhung des Bremsdrucks an der Radbremse (24a; 24b) mittels Hydraulikfluid das Hydraulikfluid allmählich dem Zwischenspeicher (26) zugeführt wird, und in entsprechendem Maß gleichzeitig die elektrische Maschine zunehmend generatorisch betrieben wird, um eine dem Fahrerbremswunsch entsprechende Bremsung an dem Rad zu erzielen.

2. Fahrzeugbremssystem nach einem der vorhergehenden Ansprüche, wobei die elektronische Steuerung (ECU) die elektrische Maschine so steuert, dass bei einer Erhöhung des Fahrerbremswunschs die elektrische Maschine während der Erhöhung des Bremsdrucks an der Radbremse (24a; 24b) weiterhin in dem Maß generatorisch betrieben wird, welches der Bremsung durch die elektrische Maschine vor der Erhöhung des Fahrerbremswunschs entspricht.

3. Fahrzeugbremssystem nach einem der vorhergehenden Ansprüche, wobei die elektronische Steuerung (ECU) die elektrische Maschine so steuert, dass die von der elektrischen Maschine bereitgestellte Bremsung reduziert wird, wenn der Fahrerbremswunsch durch eine Änderung der Stellung des Bremspedals (12) abnimmt.

4. Fahrzeugbremssystem nach einem der vorhergehenden Ansprüche, wobei der dem zusätzlich zugeführten Hydraulikfluid entsprechende Bremsdruck an der Radbremse (24a; 24b) der Differenz aus dem veränderten Fahrerbremswunsch und dem Fahrerbremswunsch vor der Erhöhung entspricht.

5. Fahrzeugbremssystem nach einem der vorhergehenden Ansprüche, wobei die Summe des mittels des Hydraulikfluids an der Radbremse (24a; 24b) bereitgestellten Bremsdrucks und der von der generatorisch betriebenen elektrischen Maschine bereitgestellten Bremsung stets dem Fahrerbremswunsch entspricht.

6. Fahrzeugbremssystem nach einem der vorhergehenden Ansprüche, wobei das Fahrzeugbremssystem zum Zuführen des Hydraulikfluids aus dem Zwischenspeicher (26) eine Pumpe (28) aufweist.

7. Fahrzeugbremssystem nach Anspruch 6, wobei der Zwischenspeicher (26) mit der Zuführleitung (20) verbunden ist und der Druckaufbau in der Zuführleitung (20) bei abnehmender Fahrzeuggeschwindigkeit gesteuert wird, indem die elektronische Steuerung (ECU) die Drehzahl der Pumpe (28) verändert.

8. Fahrzeugbremssystem nach Anspruch 7, wobei auf die Pumpe (28) und die Regulierung des Durchsatzes von Hydraulikfluid wirkende Störeinflüsse mittels vorher bestimmten Kennfeldern in der elektronischen Steuerung (ECU) korrigiert werden.

9. Fahrzeugbremssystem nach einem der vorhergehenden Ansprüche, wobei die elektronische Steuerung (ECU) in einer Fahrzeug-/Bremssteuerung implementiert ist.

10. Fahrzeugbremssystem nach einem der vorhergehenden Ansprüche, wobei die elektronische Steuerung (ECU) zur Erzeugung eines Bremsdrucks an der Radbremse (24a; 24b) Ventile (30; 32; 36) in der Zuführleitung (20) öffnet.

11. Fahrzeugbremssystem nach einem der vorhergehenden Ansprüche, wobei die elektronische Steuerung (ECU) nach Erreichen des dem Fahrerbremswunsch entsprechenden Bremsdrucks an der Radbremse (24a; 24b) die Zufuhr von Hydraulikfluid von dem Hauptzylinder (16) zu der Radbremse (24a; 24b) in der Zuführleitung (20) durch Schließen wenigstens eines der Ventile (30; 32; 36) in der Zuführleitung (20) unterbricht.

12. Fahrzeugbremssystem nach einem der vorhergehenden Ansprüche, wobei während dem Abbauen des mittels des Hydraulikfluids hervorgerufenen Bremsdrucks das Hydraulikfluid dem Zwischenspeicher (26) zugeführt wird.

13. Fahrzeugbremssystem nach einem der vorhergehenden Ansprüche, wobei die elektronische Steuerung (ECU) zum Abbauen des mittels des Hydraulikfluids hervorgerufenen Bremsdrucks an der Radbremse (24a; 24b) ein Ventil (34; 38) zwischen der Radbremse (24a; 24b) und dem Zwischenspeicher (26) in der Rückführleitung (22a; 22b) öffnet.

14. Fahrzeugbremssystem nach Anspruch 13, wobei die elektronische Steuerung (ECU) das Ventil (34; 38) zwischen der Radbremse (24a; 24b) und dem Zwischenspeicher (26) in der Rückführleitung (22a; 22b) nach dem Abbauen des mittels des Hydraulikfluids hervorgerufenen Bremsdrucks an der Radbremse (24a; 24b) schließt.

15. Fahrzeugbremssystem nach Anspruch 14, wobei die elektronische Steuerung (ECU) bei abnehmender Fahrzeuggeschwindigkeit das Ventil (34; 38) zwischen der Radbremse (24a; 24b) und dem Zwischenspeicher (26) und/oder wenigstens eines der Ventile (30; 32; 36) in der Zuführleitung (20) öffnet.

## Claims

1. Vehicle brake system having an electronic control unit (ECU) for controlling a vehicle brake arrangement (10) and an electric machine operable as a motor and a generator, wherein the electronic control unit (ECU) communicates with the vehicle brake arrangement (10) and the electric machine and is designed to operate the electric machine regeneratively to achieve a vehicle braking effect, and wherein the vehicle brake arrangement (10) comprises at least one wheel brake (24a; 24b), a master cylinder (16) for generating a brake pressure at the wheel brake (24a; 24b) by means of a hydraulic fluid, a feed line (20) and a return line (22a; 22b), a plurality of valves (30, 32, 34, 36, 38, 40) for controlling the supply and discharge of the hydraulic fluid, and an intermediate accumulator (26), wherein the electronic control unit (ECU) is further designed to control the valves (30, 32, 34, 36, 38, 40) and the electric machine in such a way that
upon a driver braking request through actuation of a brake pedal (12), hydraulic fluid is supplied to the wheel brake (24a; 24b) from the master cylinder (16) through the feed line (20) in order to generate a brake pressure at the wheel brake (24a; 24b),
upon achieving at the wheel brake (24a; 24b) the brake pressure corresponding to the driver braking request, the supply of hydraulic fluid from the master cylinder (16) to the wheel brake (24a; 24b) is interrupted, wherein the brake pressure generated by means of hydraulic fluid is gradually reduced and to a corresponding extent at the same time the electric machine is operated increasingly generatively or in order to achieve a braking of at least one wheel of the vehicle corresponding to the driver braking request,
upon an increase of the driver braking request, hydraulic fluid is additionally supplied from the master cylinder (16) to the at least one wheel brake (24a; 24b), and,
upon a decrease of vehicle velocity, the electric machine is operated decreasingly as a generator and to a corresponding extent at the same time hydraulic fluid is fed from the intermediate accumulator (26) and/or the master cylinder (16) to the wheel brake (24a; 24b) in order to achieve at the wheel brake (24a; 24b) a brake pressure corresponding to the driver braking request, wherein the electronic control unit (ECU) controls the electric machine and the valves (30, 32, 34, 36, 38, 40) in such a way that upon each further increase of the driver braking request through actuation of the brake pedal (12), a quantity of hydraulic fluid corresponding to the increase is fed to the wheel brake (24a; 24b) in order to increase the brake pressure at the wheel brake (24a; 24b), and that after each increase of the brake pressure at the wheel brake (24a; 24b) by means of hydraulic fluid, the hydraulic fluid is supplied gradually to the intermediate accumulator (26), and to a corresponding extent at the same time the electric machine is operated increasingly generatively or in order to achieve at the wheel a braking corresponding to the driver braking request.

2. Vehicle brake system according to one of the preceding claims, wherein the electronic control unit (ECU) controls the electric machine in such a way that upon an increase of the driver braking request, the electric machine during the increase of the brake pressure at the wheel brake (24a; 24b), continues to be operated as a generator to the extent corresponding to the braking by the electric machine prior to the increase of the driver braking request.

3. Vehicle brake system according to one of the preceding claims, wherein the electronic control unit (ECU) controls the electric machine in such a way that the braking provided by the electric machine is reduced when the driver braking request decreases as a result of a change of the position of the brake pedal (12).

4. Vehicle brake system according to one of the preceding claims, wherein the brake pressure provided at the wheel brake (24a; 24b) and corresponding to the additionally supplied hydraulic fluid corresponds to the difference of the modified driver braking request and the driver braking request prior to the increase.

5. Vehicle brake system according to one of the preceding claims, wherein the sum of the brake pressure provided by means of the hydraulic fluid at the wheel brake (24a; 24b) and the braking provided by the regeneratively operated electric machine always corresponds to the driver braking request.

6. Vehicle brake system according to one of the preceding claims, wherein the vehicle brake system comprises a pump (28) for supplying the hydraulic fluid from the intermediate accumulator (26).

7. Vehicle brake system according to claim 6, wherein the intermediate accumulator (26) is connected to the feed line (20) and, upon a decrease in the vehicle velocity, the pressure build-up in the feed line (20) is controlled in that the electronic control unit (ECU) changes the rotational speed of the pump (28).

8. Vehicle brake system according to claim 7, wherein disruptive influences affecting the pump (28) and the regulation of the flow rate of hydraulic fluid are corrected by means of previously determined characteristics maps in the electronic control unit (ECU).

9. Vehicle brake system according to one of the preceding claims, wherein the electronic control unit (ECU) is implemented in a vehicle-/braking controller.

10. Vehicle brake system according to one of the preceding claims, wherein the electronic control unit (ECU) in order to generate a brake pressure at the wheel brake (24a; 24b) opens valves (30; 32; 36) in the feed line (20).

11. Vehicle brake system according to one of the preceding claims, wherein the electronic control unit (ECU) after achieving at the wheel brake (24a; 24b) the brake pressure corresponding to the driver braking request, interrupts the feed of hydraulic fluid from the master cylinder (16) to the wheel brake (24a; 24b) in the feed line (20) by closing at least one of the valves (30; 32; 36) in the feed line (20).

12. Vehicle brake system according to one of the preceding claims, wherein, during the reduction of the brake pressure generated by means of the hydraulic fluid, the hydraulic fluid is supplied to the intermediate accumulator (26).

13. Vehicle brake system according to one of the preceding claims, wherein the electronic control unit (ECU), in order to reduce the brake pressure generated at the wheel brake (24a; 24b) by means of the hydraulic fluid, opens a valve (34; 38) between the wheel brake (24a; 24b) and the intermediate accumulator (26) in the return line (22a; 22b).

14. Vehicle brake system according to claim 13, wherein the electronic control unit (ECU) closes the valve (34; 38) between the wheel brake (24a; 24b) and the intermediate accumulator (26) in the return line (22a; 22b) after the reduction at the wheel brake (24a; 24b) of the brake pressure generated by means of the hydraulic fluid.

15. Vehicle brake system according to claim 14, wherein, upon a decrease of the vehicle velocity, the electronic control unit (ECU) opens the valve (34; 38) between the wheel brake (24a; 24b) and the intermediate accumulator (26) and/or at least one of the valves (30; 32; 36) in the feed line (20).

## Revendications

1. Système de freinage de véhicule, comprenant une commande électronique (ECU) pour commander un système de freinage de véhicule (10) et une machine électrique pouvant fonctionner en mode moteur et en mode générateur, ladite commande électronique (ECU) communiquant avec le système de freinage de véhicule (10) et la machine électrique et étant conçue pour faire fonctionner la machine électrique en mode générateur pour obtenir un effet de freinage sur le véhicule, et le système de freinage de véhicule (10) présentant au moins un frein de roue (24a ; 24b), un maître-cylindre (16) pour générer au frein de roue (24a ; 24b) une pression de freinage au moyen d'un fluide hydraulique, une conduite d'alimentation (20) et une conduite de retour (22a ; 22b), un grand nombre de valves (30, 32, 34, 36, 38, 40) pour réguler l'alimentation en fluide hydraulique et l'évacuation de celui-ci, ainsi qu'un réservoir intermédiaire (26), la commande électronique (ECU) étant en outre conçue pour commander les valves (30, 32, 34, 36, 38, 40) et la machine électrique de telle sorte que
lorsque le conducteur manifeste sa volonté de freiner en actionnant une pédale de frein (12), le fluide hydraulique du frein de roue (24a ; 24b) est acheminé à travers la conduite d'alimentation (20) depuis le maître-cylindre (16) jusqu'au frein de roue (24a ; 24b) pour y générer une pression de freinage,
après que la pression de freinage correspondante au souhait de freinage du conducteur a été atteinte au frein de roue (24a ; 24b), l'alimentation du frein de roue (24a ; 24b) en fluide hydraulique à partir du maître-cylindre (16) est interrompue, la pression de freinage induite par le fluide hydraulique diminuant progressivement et la machine électrique fonctionnant en mode générateur augmentant simultanément dans une mesure correspondante son régime pour obtenir un freinage correspondant au souhait de freinage du conducteur sur au moins une roue du véhicule,
lorsque le conducteur manifeste sa volonté de freiner plus fort, une quantité supplémentaire de fluide hydraulique est acheminée à partir du maître-cylindre (16) jusqu'audit au moins un frein de roue (24a ; 24b),
et
lorsque le véhicule ralentit, la machine électrique fonctionnant en mode générateur réduit son régime et le frein de roue (24a ; 24b) est simultanément alimenté en fluide hydraulique acheminé dans une mesure correspondante à partir du réservoir intermédiaire (26) et/ou du maître-cylindre (16) pour obtenir au frein de roue (24a ; 24b) une pression de freinage correspondante au souhait de freinage du conducteur, la commande électronique (ECU) commandant la machine électrique et les valves (30, 32, 34, 36, 38, 40) de telle sorte qu'à chaque fois que le conducteur manifeste sa volonté de freiner plus fort en actionnant la pédale de frein (12), une quantité de fluide hydraulique augmentée dans une mesure correspondante est acheminée jusqu'au frein de roue (24a ; 24b) pour augmenter la pression de freinage au frein de roue (24a ; 24b), et qu'après chaque augmentation de la pression de freinage induite par le fluide hydraulique au frein de roue (24a ; 24b), le fluide hydraulique est acheminé progressivement jusqu'au réservoir intermédiaire (26), et la machine électrique fonctionnant en mode générateur augmente simultanément dans une manière correspondante son régime pour obtenir à la roue un freinage correspondant au souhait de freinage du conducteur.

2. Système de freinage de véhicule selon l'une des revendications précédentes, la commande électronique (ECU) commandant la machine électrique de telle sorte que lorsque le conducteur manifeste sa volonté de freiner plus fort, la machine électrique continue pendant l'augmentation de la pression de freinage au frein de roue (24a ; 24b) à fonctionner en mode générateur dans une mesure qui correspond au freinage induit par la machine électrique avant que le conducteur ait manifesté sa volonté de freiner plus fort.

3. Système de freinage de véhicule selon l'une des revendications précédentes, la commande électronique (ECU) commandant la machine électrique de telle sorte que le freinage fourni par la machine électrique diminue lorsque le conducteur manifeste sa volonté de freiner moins fort en modifiant en conséquence la position de la pédale de frein (12).

4. Système de freinage de véhicule selon l'une des revendications précédentes, la pression de freinage au frein de roue (24a ; 24b) correspondante à la quantité supplémentaire de fluide hydraulique étant égale à la différence entre le souhait de freinage modifié du conducteur et le souhait de freinage accru du conducteur.

5. Système de freinage de véhicule selon l'une des revendications précédentes, la somme de la pression de freinage fournie au frein de roue (24a ; 24b) par le fluide hydraulique et du freinage fourni par la machine électrique fonctionnant en mode générateur correspondant toujours au souhait de freinage du conducteur.

6. Système de freinage de véhicule selon l'une des revendications précédentes, ce système de freinage de véhicule présentant une pompe (28) servant à assurer l'alimentation en fluide hydraulique depuis le réservoir intermédiaire (26).

7. Système de freinage de véhicule selon la revendication 6, ledit réservoir intermédiaire (26) étant relié à la conduite d'alimentation (20), et la montée en pression dans la conduite d'alimentation (20) en cas de ralentissement du véhicule étant commandée par la commande électronique (ECU) qui modifie pour ce faire le régime de la pompe (28).

8. Système de freinage de véhicule selon la revendication 7, des influences perturbatrices agissant sur la pompe (28) et sur la régulation du débit de fluide hydraulique étant corrigées dans la commande électronique (ECU), au moyen de diagrammes caractéristiques préalablement déterminés.

9. Système de freinage de véhicule selon l'une des revendications précédentes, la commande électronique (ECU) étant implémentée dans une commande de freinage/de véhicule.

10. Système de freinage de véhicule selon l'une des revendications précédentes, la commande électronique (ECU) ouvrant des valves (30 ; 32, 36) dans la conduite d'alimentation (20) pour générer une pression de freinage au frein de roue (24a ; 24b).

11. Système de freinage de véhicule selon l'une des revendications précédentes, la commande électronique (ECU) interrompant dans la conduite d'alimentation (20) l'alimentation en fluide hydraulique depuis le maître-cylindre (16) jusqu'au frein de roue (24a ; 24b) en fermant au moins une des valves (30 ; 32 ; 36) dans la conduite d'alimentation (20) après atteinte au frein de roue (24a ; 24b) de la pression de freinage correspondante au souhait de freinage du conducteur.

12. Système de freinage de véhicule selon l'une des revendications précédentes, le fluide hydraulique étant acheminé jusqu'au réservoir intermédiaire (26) pendant la diminution de la pression de freinage induite par le fluide hydraulique.

13. Système de freinage de véhicule selon l'une des revendications précédentes, la commande électronique (ECU) ouvrant dans la conduite de retour (22a ; 22b) une valve (34 ; 38) entre le frein de roue (24a ; 24b) et le réservoir intermédiaire (26) pour réduire la pression de freinage induite par le fluide hydraulique au frein de roue (24a ; 24b).

14. Système de freinage de véhicule selon la revendication 13, la commande électronique (ECU) fermant la valve (34 ; 38) entre le frein de roue (24a ; 24b) et le réservoir intermédiaire (26) dans la conduite de retour (22a ; 22b) après diminution de la pression de freinage induite par le fluide hydraulique au frein de roue (24a ; 24b).

15. Système de freinage de véhicule selon la revendication 14,
la commande électronique (ECU) ouvrant la valve (34 ; 38) entre le frein de roue (24a ; 24b) et le réservoir intermédiaire (26) et/ou au moins une valve (30 ; 32 ; 36) dans la conduite d'alimentation (20) lors de la décélération du véhicule.
